# FASCICULE DE BREVET EUROPEEN

(11) **EP 0 479 673 B1**
(45) Date de publication et mention de la délivrance du brevet: **17.05.1995**
(21) Numéro de dépôt: 91402626.5
(22) Date de dépôt: 02.10.1991
(51) Int. Cl.: F16H 21/18, B60S 1/16

(54) **Moto-réducteur muni d'un couvercle de fermeture de carter du moto-réducteur, notamment moto-réducteur d'essuyage**
Getriebemotor mit seinem Gehäuseverschlussdeckel, insbesondere für eine Scheibenwischeranlage
Geared motor with its housing closure cover, especially for a windscreenwiper

(30) Priorité: 05.10.1990 FR 9012284
(43) Date de publication de la demande: 08.04.1992
(73) Titulaire: VALEO SYSTEMES D'ESSUYAGE, 78180 Montigny-Le-Bretonneux (FR)
(72) Inventeur: Blanchet, Pierre, F-86140 Lencloitre (FR)
(74) Mandataire: Gamonal, Didier

(56) Documents cités:
- EP-A- 0 316 831
- DE-A- 3 740 312
- FR-A- 2 552 723
- FR-A- 2 603 358

## Description

La présente invention se rapporte à un moto-réducteur muni d'un couvercle de fermeture de carter du moto réducteur, notamment moto-réducteur d'essuyage.

Comme déjà connu, un moto-réducteur est constitué d'un moteur électrique dont l'arbre du rotor se prolonge en dehors du moteur électrique par une vis sans fin pénétrant dans un carter creux fermé par un couvercle.

Ce carter comporte, dans son volume creux, un système de réduction constitué d'une roue dentée entraînée en rotation par la vis sans fin et entraînant par l'intermédiaire d'un axe excentré porté par ladite roue de manière libre en rotation et en translation axiale, un système bielle-manivelle relié de manière fixe audit axe, ledit système permettant de transformer le mouvement circulairement continu de cette roue en un mouvement de rotation alternatif à un arbre de sortie traversant le fond du carter et entraînant un dispositif d'essuyage.

Un tel moto-réducteur doit pouvoir transmettre des efforts très importants et il est nécessaire d'immobiliser en translation axiale l'axe excentré porté par la roue en le calant de manière à ce que celui-ci ne puisse pas coulisser axialement sous l'effort transmis par la roue, en venant heurter le couvercle et en générant des bruits intempestifs et, de par la liaison rigide avec le système bielle-manivelle, entraîner ce système et l'arbre de sortie dans un déplacement également axial risquant de faire heurter et frotter le système bielle-manivelle sur le couvercle en créant des bruits de chocs ou des crissements.

Il a déjà été proposé, par exemple dans DE-A-3 247 421, d'utiliser le couvercle en tant que surface de butée de l'extrémité supérieure de l'axe excentré porté par la roue.

A cet effet, l'extrémité supérieure dudit axe est munie d'un moyen de calage constitué d'un capuchon plastique s'appuyant sur la surface interne du couvercle et la surface de la barre de transmission du système bielle-manivelle en regard du couvercle.

La matière du capuchon est une matière plastique à faible coefficient de frottement de sorte que celui-ci puisse s'appuyer avec un frottement très faible sur le couvercle, sans provoquer d'élévation notable de la température tout en ne gênant pas la rotation dudit axe dans le logement prévu à cet effet dans la roue et son déplacement circulaire généré par ladite roue.

Mais cette disposition, si elle est efficace, est relativement coûteuse en frais de montage et génère quand même un frottement non négligeable.

En effet, lors des opérations de montage, le capuchon est une pièce de petite taille qui n'est pas facile à loger sur l'extrémité de l'axe excentré et ce capuchon peut quitter l'extrémité de cet axe lors de manipulations dans le processus de montage.

En outre, le capuchon est prisonnier entre la face interne du couvercle et la face de la barre de transmission en regard de ce couvercle, ce qui, compte tenu des tolérances de fabrication, peut engendrer un effort de serrage axial assez grand sur ledit capuchon et entraîner des efforts de freinage par frottement au niveau des surfaces de contact avec ce capuchon pouvant gêner le bon fonctionnement de l'ensemble.

De plus, il est nécessaire de disposer d'une multiplicité de tailles de capuchon en relation avec chaque type de moto-réducteur.

Il est également connu par le document FR-A-2 552 723 de prévoir des rampes saillantes à partir du couvercle, rampes venant en contact avec le capuchon pour empêcher le mouvement axial de l'axe excentré.

Ce dispositif présente l'inconvénient de nécessiter une opération de formage du couvercle, opération qui ne permet pas de régler précisément la hauteur des rampes ce qui peut entraîner un disfonctionnement dans le rôle de ces dernières, soit par un manque d'appui sur le capuchon si ces rampes sont trop petites, soit par un surcroît d'appui dans le cas où celles-ci sont trop hautes, ce surcroît d'appui pouvant entraîner une résistance au glissement du capuchon.

De plus dans le document DE-A-37 40 312, il est prévu de disposer coaxialement à l'arbre de sortie une rondelle évidée qui empêche tout contact de l'arbre avec le couvercle.

Cette disposition nécessite de prévoir une rondelle qui est un élément qui peut facilement sortir de son réceptacle et glisser soit dans le carter en risquant d'endommager le mécanisme réducteur soit hors du carter et dans ce cas l'arbre pourra facilement se déplacer axialement et venir cogner sur le couvercle.

Selon la présente invention, un moto-réducteur muni d'un couvercle de fermeture d'un carter creux du moto-réducteur, notamment moto-réducteur d'essuyage, comportant, dans le volume creux dudit carter, une roue dentée mobile en rotation autour d'un axe et portant de manière libre en rotation et en translation axiale un axe calé axialement et excentré par rapport à l'axe de ladite roue qui entraînant un système bielle-manivelle permettant d'engendrer, à partir du mouvement de rotation continue de ladite roue, un mouvement de rotation alternatif à un arbre de sortie, ledit couvercle portant sur sa face interne dirigée vers le carter au moins une surépaisseur de glissement pour l'axe excentré et une rondelle disposée coaxialement à l'arbre de sortie, caractérisé en ce que la surépaisseur et la rondelle se présentent sous la forme d'une pièce monobloc en matériau à faible coefficient de frottement.

Ainsi, l'axe qui est monté, à son extrémité inférieure dans un logement de la roue dentée est maintenu en translation axiale à sa surface supérieure par simple contact avec la surépaisseur de frottement tout en évitant de prévoir une pièce supplémentaire sur celui-ci.

Selon une autre caractéristique de l'invention, la surépaisseur est prévue sur tout le cheminement circulaire de l'axe autour de l'axe de la roue.

Grâce à cette disposition, l'axe excentré est maintenu en translation axiale surtout le chemin circulaire qu'il parcourt.

Les autres caractéristiques et avantages de l'invention vont apparaître dans la description qui va suivre et en se référant aux dessins annexés parmi lesquels :
- la figure 1 est une vue schématique en coupe montrant un moto-réducteur muni d'un couvercle selon l'invention ;
- la figure 2 est une vue en élévation selon la figure 1 montrant l'élément rapporté sur le couvercle selon l'invention et dans lequel le couvercle est considéré comme transparent ;
- la figure 3 est une vue par dessous de l'élément rapporté seul selon une réalisation pratique ;
- la figure 4 est une vue de dessus de l'élément rapporté selon la figure 3 ;
- la figure 5 est une vue schématique en élévation du couvercle destiné à recevoir l'élément rapporté ;
- la figure 6 est une vue latérale en coupe selon la ligne VI-VI de la figure 5.

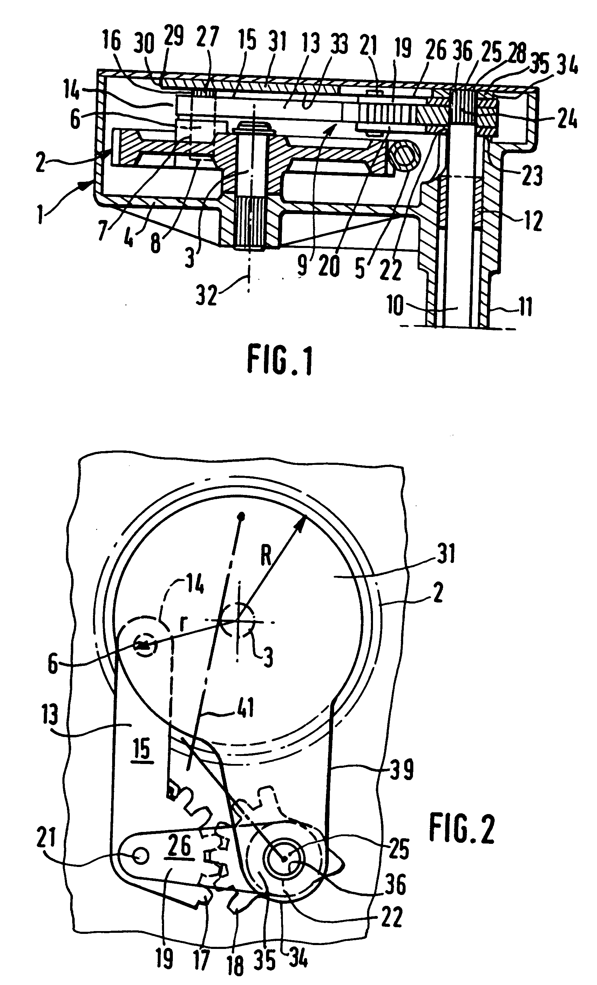

En se référant aux figures 1 et 2, un carter 1 d'un moto-réducteur, notamment pour l'entraînement d'un dispositif d'essuyage, contient un système de réduction constitué d'une roue dentée 2 montée libre en rotation sur un arbre 3 porté par le fond 4 de ce carter et entraînée en rotation par une vis sans fin 5 issue du rotor d'un moteur électrique (non représenté).

La roue 2 porte un axe 6 sensiblement parallèle à l'arbre 3 et disposé de manière excentrée par rapport audit arbre en étant monté libre en rotation et en translation axiale dans un logement 7 à fond fermé 8 que présente ladite roue 2.

L'axe 6 est relié de manière fixe, telle que par sertissage, à un système bielle-manivelle 9 permettant de transformer le mouvement de rotation continue de la roue 2 en un mouvement de rotation alternatif à un arbre de sortie 10 logé dans un fût 11 que présente le fond dudit carter en reposant sur un coussinet anti-friction 12.

Le système bielle-manivelle 9 présente un bras 13, formant bielle, relié de manière fixe à l'une 14 de ses extrémités avec l'axe 6 en laissant dépasser, au-delà de sa face externe 15, un tronçon d'extrémité 16 d'axe 6 et présente à son autre extrémité un secteur denté 17 engrenant avec un autre secteur denté 18 lié de manière fixe à l'arbre de sortie 10 en formant une manivelle, deux flasques 19, 20 étant disposés de part et d'autre des faces longitudinales des secteurs dentés 16 et 19 de manière à relier rigidement le bras 13 à l'arbre 10, d'une part par l'intermédiaire d'une tige 21 libre en rotation disposée à l'une des extrémités des flasques et traversant l'épaisseur du bras et, d'autre part, par une ouverture 22 prévue à l'autre extrémité desdits flasques qui vient, pour le flasque 20, se disposer entre la face inférieure du secteur denté 18 et la face d'appui 23 que présente le fond du carter en étant engagé le long de l'arbre de sortie 10 et, pour le flasque 19, entourer l'extrémité supérieure 24 de l'arbre de sortie 10 en laissant dépasser une portion 25 au-delà de la face externe 26 du flasque 19.

En pratique la surface supérieure terminale 27 du tronçon 16 est située sensiblement sur le même plan que la surface externe 26 du flasque 19 et la surface supérieure terminale 28 de la portion 25 est située sur un plan plus haut en considérant la figure 1.

Bien entendu et cela sans sortir du cadre de l'invention le système bielle-manivelle peut être un système classique à deux tringles articulées l'une avec l'autre par l'intermédiaire d'un axe de rotation.

Comme mieux visible sur la figure 1, le carter 1 est fermé à sa partie supérieure par un couvercle 29 généralement réalisé à partir d'une feuille métallique de faible épaisseur et reliée au bord dudit carter par tous moyens connus tels que serrage par vis ou rivetage.

Ce couvercle présente, sur sa face interne dirigée vers le volume creux du carter 1, une surépaisseur 30 constituée, dans l'exemple représenté, par une plaquette plane 31 de faible coefficient de frottement rapportée de manière fixe sur ledit couvercle.

En relation avec la figure 2, la plaquette 31 présente une forme périphérique circulaire dont le rayon R est au moins égal au rayon r considéré entre l'axe de rotation 32 de la roue 2 et la périphérie de l'axe 6 la plus proche du bord externe de la roue 2, le rayon R correspondant ainsi au déplacement circulaire de l'axe 6 autour de l'axe 32 sous l'impulsion de la roue 2, ladite plaquette ainsi conformée étant placée coaxialement avec l'axe 32.

Ainsi lors du montage et du vissage du couvercle 19 sur le bord du carter 1, il est prévu que la face externe 33 dirigée vers le carter 1 de la surépaisseur 30, ici constituée par la plaquette 31, soit d'une épaisseur telle que cette surépaisseur vienne porter à glissement sur la surface supérieure terminale 27 de l'axe 6 en immobilisant en translation axiale l'axe 6 entre ladite face externe de la plaquette et le fond 8 du logement 7.

Grâce à la composition et à la forme circulaire de la plaquette 31, la surface terminale 27 peut glisser facilement tout au long du mouvement circulaire de l'axe 6 autour de l'axe 32 alors que l'axe 6 est calé en direction axiale.

Avantageusement, il peut être prévu que la surface terminale 27 soit une surface bombée en direction du couvercle, en présentant par exemple une surface hémisphérique permettant ainsi un contact ponctuel entre cette surface et la surface de la plaquette 31 en regard.

En se référant en plus à la figure 2, le couvercle 29 porte également sur sa face interne, de manière fixe, une deuxième surépaisseur 34 formée par une rondelle évidée 35 présentant un alésage 36 de diamètre supérieur à celui du diamètre de la portion 25 précédemment définie et un diamètre extérieur permettant de recouvrir au moins partiellement l'extrémité du flasque 19 présent au niveau de l'arbre de sortie 10 en étant disposé coaxialement avec la portion 25 de l'arbre de sortie 10.

De ce fait, lors de la fermeture du carter 1 par le couvercle 29, la rondelle 35 vient entourer la portion 25 en prenant appui par sa face dirigée vers le carter sur la face externe 26 du flasque 19 et plus particulièrement au niveau de la surface considérée autour de la portion 25.

Bien entendu, il est prévu que la surface terminale supérieure 28 de la portion 25 soit disposée de telle manière que, après disposition du couvercle, cette surface terminale se trouve à distance de la face interne du couvercle dirigée vers le carter, de façon à éviter un contact entre les deux surfaces.

Ainsi, non seulement l'arbre de sortie 10 est immobilisé en translation axiale entre la face d'appui 23 et la face de la rondelle 35 dirigée vers le carter, mais aussi tous mouvements radiaux de cette portion d'arbre, comprise dans le carter c'est-à-dire celle située au-delà du palier 12, par exemple sous l'action des efforts de transmission du système bielle-manivelle 9, sont empêchés par la disposition de la portion 25 dans l'alésage 36 de la rondelle 35 servant dans ce cas de palier radial.

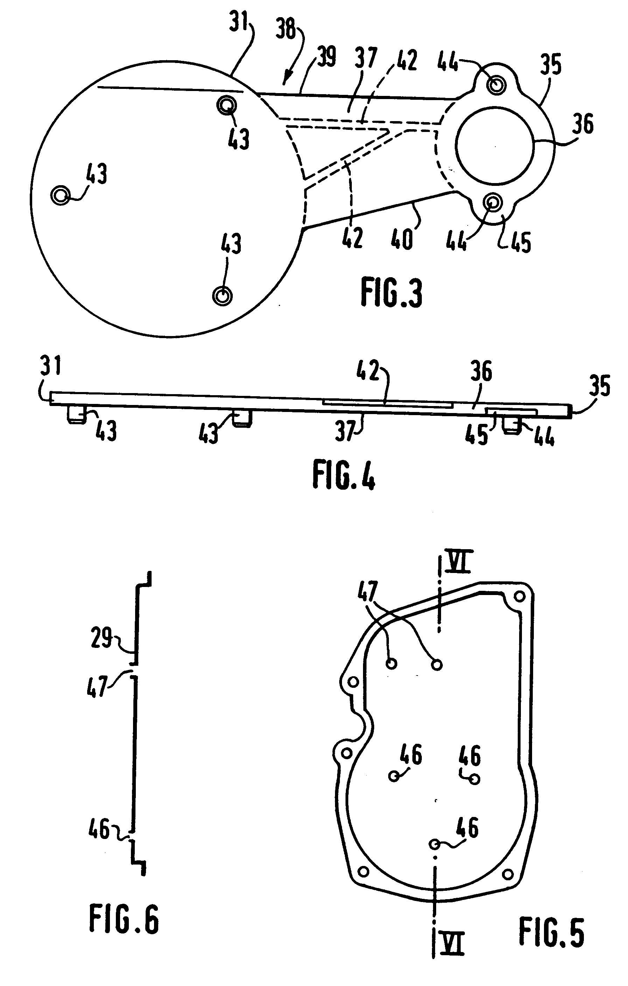

En pratique, et comme cela est visible sur les figures 3 et 4, la plaquette 31 et la rondelle 35 sont reliées entre elles par un bras radial 37 permettant ainsi de créer une plaque monobloc 38, pouvant être par exemple moulée, en permettant de réaliser la plaquette 31, la rondelle 35 et le bras 37 sous la forme d'une seule et unique pièce.

Comme visible sur la figure 3, le bras 37 présente un bord haut sensiblement horizontal 39 qui relie la plaquette 31 et la rondelle 35 sensiblement au niveau de leurs parties hautes en considérant cette figure et un bord bas incliné 40 reliant la partie basse de la rondelle évidée 35 à la partie sensiblement médiane de la plaquette 31 de manière à autoriser le débattement alternatif circulaire de la tige 21 autour de l'axe longitudinal passant par l'arbre de sortie 10 comme cela est représenté sur la figure 2 par le trait mixte interrompu 41.

De préférence, l'épaisseur du bras 37 est moindre que celle de la plaquette 31 et de la rondelle 35 et présente des nervures de raidissement 42.

Bien entendu, la plaque 38 est également disposée de manière fixe sur le couvercle par tous moyens appropriés tels que collage ou autres mais en pratique la plaque 38 présente d'une part, sur la plaquette 31, trois picots de fixation 43 régulièrement répartis circonférentiellement et situés sur un rayon plus petit que le rayon R de la plaquette 31 en étant élaborés de manière monobloc avec ladite plaquette et d'autre part, à partir de la rondelle 35, deux autres picots de fixation 44 prévus à partir de deux oreilles 45 diamètralement opposées et prévus en saillie dans le même plan longitudinal et à partir du bord périphérique de ladite rondelle.

Les picots 43, 44 sont adaptées à pénétrer dans des ouvertures correspondantes 46, 47 prévues à travers le couvercle 29 (figures 5 et 6), les ouvertures 46 et 47, ici des alésages, correspondent sensiblement en dimension et en disposition aux dimensions et à la disposition des picots 43, 44 qui sont de dimension axiale supérieure à l'épaisseur du couvercle 29 de manière à permettre la fixation par rivetage à chaud, par exemple, des extrémités des picots dépassant du couvercle.

Dans le cas où le couvercle 29 est réalisé en matière plastique, il est prévu que la matière du couvercle soit une matière à faible coefficient de frottement. Grâce à cela il est facile d'élaborer conjointement le couvercle 29, les surépaisseurs 30 et 34 en une seule pièce et dans la même matière, ou le couvercle 29 et la plaque 38.

Il va de soi que de nombreuses variantes peuvent être introduites, notamment par substitution de moyens techniquement équivalents, sans pour autant sortir du cadre des revendications.

## Revendications

1. Moto-réducteur muni d'un couvercle de fermeture d'un carter creux (1) du moto-réducteur, notamment moto-réducteur d'essuyage, comportant dans le volume creux dudit carter, une roue dentée (2) mobile en rotation autour d'un axe (32) et portant de manière libre en rotation et en translation axiale un axe (6) calé axialement et excentré par rapport à l'axe (32) de ladite roue qui entraîne un système bielle-manivelle (9) permettant d'engendrer, à partir du mouvement de rotation continue de ladite roue, un mouvement de rotation alternatif à un arbre de sortie (10), ledit couvercle portant sur sa face interne dirigée vers le carter au moins une surépaisseur plane (30, 34) de glissement pour l'axe excentré (6) et une rondelle (35) disposée coaxialement à l'arbre de sortie (10), caractérisé en ce que la surépaisseur (30,34) et la rondelle (35) se présentent sous la forme d'une pièce monobloc en matériau à faible coefficient de frottement.

2. Moto-réducteur selon la revendication 1, caractérisé en ce que la surépaisseur (30) est prévue sur tout le cheminement circulaire de l'axe excentré (6) autour de l'axe (32) de la roue (2).

3. Moto-réducteur selon la revendication 1 ou 2, caractérisé en ce que la surépaisseur (30) est réalisée par une plaquette plane (31) portée de manière fixe par la face interne du couvercle (29) .

4. Moto-réducteur selon la revendication 3, caractérisé en ce que la surépaisseur (30) formée par la plaquette plane (31) présente une forme circulaire pleine coaxiale à l'axe (32) de la roue dentée (2).

5. Moto-réducteur selon l'une des revendications 3 ou 4, caractérisé en ce que la plaquette (31) et la rondelle évidée (35) sont reliées l'une à l'autre par un bras (37).

6. Moto-réducteur selon l'une des revendications 3 à 5, caractérisé en ce que la plaquette (31) et/ou la rondelle (35) sont munies de picots de fixation (44,45) sur le couvercle (29).

7. Moto-réducteur selon l'une des revendications 5 ou 6, caractérisé en ce que la plaquette (31), la rondelle évidée (35) et le bras (37) sont réalisés en une seule pièce monobloc en formant une plaque (38).

8. Moto-réducteur selon l'une des revendications précédentes, caractérisé en ce que le couvercle (29), la surépaisseur (30,34) et la rondelle sont réalisés en une seule pièce monobloc en matériau à faible coefficient de frottement.

## Patentansprüche

1. Getriebemotor mit einem Verschlußdeckel für ein hohles Gehäuse (1) des Getriebemotors, insbesondere für eine Scheibenwischeranlage, bei dem sich im Hohlraum des genannten Gehäuses ein Zahnrad (2) befindet, das drehbar um eine Achse (32) angeordnet ist und das drehbeweglich und axial verschiebbar eine axial verkeilte und im Verhältnis zur Achse (32) des genannten Zahnrads außermittige Achse (6) trägt, wobei das Zahnrad einen Kurbeltrieb (9) antreibt, der es ermöglicht, aus einer kontinuierlichen Drehbewegung des genannten Zahnrads eine Pendeldrehbewegung an einer Ausgangswelle (10) zu erzeugen, wobei der genannte Deckel an seiner zum Gehäuse gerichteten Innenseite mindestens eine ebene Gleitverdickung (30, 34) für die außermittige Achse (6) und eine koaxial mit der Ausgangswelle (10) angeordnete Scheibe (35) aufweist, **dadurch gekennzeichnet,** daß die Verdickung (30, 34) und die Scheibe (35) in Form eines einstückigen Teils aus einem Material mit niedrigem Reibungskoeffizient ausgeführt sind.

2. Getriebemotor nach Anspruch 1 , **dadurch gekennzeichnet,** daß die Verdickung (30) auf der gesamten Kreisbahn der außermittigen Achse (6) um die Achse (32) des Zahnrads (2) herum vorgesehen ist.

3. Getriebemotor nach Anspruch 1 oder 2, **dadurch gekennzeichnet,** daß die Verdickung (30) durch ein ebenes Plättchen (31) gebildet wird, das fest an der Innenseite des Deckels (29) angebracht ist.

4. Getriebemotor nach Anspruch 3 , **dadurch gekennzeichnet,** daß die durch das ebene Plättchen (31) gebildete Verdickung (30) eine mit der Achse (32) des Zahnrads (2) koaxiale Vollkreisform aufweist.

5. Getriebemotor nach einem der Ansprüche 3 oder 4, **dadurch gekennzeichnet,** daß das Plättchen (31) und die Hohlscheibe (35) durch einen Arm (37) miteinander verbunden sind.

6. Getriebemotor nach einem der Ansprüche 3 bis 5, **dadurch gekennzeichnet,** daß das Plättchen (31) und/oder die Scheibe (35) mit Stiften zur Befestigung (44, 45) am Deckel (29) versehen sind.

7. Getriebemotor nach einem der Ansprüche 5 oder 6, **dadurch gekennzeichnet,** daß das Plättchen (31), die Hohlscheibe (35) und der Arm (37) aus einem einzigen einstückigen Teil hergestellt sind, wobei sie eine Platte (38) bilden.

8. Getriebemotor nach einem der vorangehenden Ansprüche , **dadurch gekennzeichnet,** daß der Deckel (29), die Verdickung (30, 34) und die Scheibe (35) aus einem einstückigen Teil aus einem Material mit niedrigem Reibungskoeffizient bestehen.

## Claims

1. A geared motor equipped with a cover for closing a hollow case (1) of the geared motor, in particular a geared motor for wiping purposes, comprising in the hollow volume of the said case a gear (2) rotatable around an axis (32) and bearing, in a freely rotating and axially displaceable manner, an axle (6) immobilised axially and eccentric in relation to the axis (32) of said gear which drives a rod-crank system (9) enabling the production, from the continuous rotational movement of the said gear, of a rocking motion at an output shaft (10), the said cover bearing on its inner face directed towards the case at least one sliding plane extra thickness (30, 34) for the eccentric axle (6) and a washer (35) disposed coaxially to the output shaft (10),
**characterised in that** the extra thickness (30, 34) and the washer (35) are in the form of a single piece made from a material having a low coefficient of friction.

2. A geared motor according to Claim 1,
**characterised in that** the extra thickness (30) is provided over the entire circular path of the eccentric axle (6) around the axis (32) of the wheel (2).

3. A geared motor according to Claim 1 or 2,
**characterised in that** the extra thickness (30) is produced by a plane disc (31) fixedly borne by the inner face of the cover (29).

4. A geared motor according to Claim 3,
**characterised in that** the extra thickness (30) formed by the plane disc (31) has a full circular shape coaxial to the axis (32) of the gear (2).

5. A geared motor according to one of Claims 3 or 4,
**characterised in that** the disc (31) and the hollow washer (35) are connected to one another by an arm (37).

6. A geared motor according to one of Claims 3 to 5,
**characterised in that** the disc (31) and/or the washer (35) are equipped with attachment pins (44, 45) on the cover (29).

7. A geared motor according to one of Claims 5 or 6,
**characterised in that** the disc (31), the hollow washer (35) and the arm (37) are made in a single piece and form a plate (38).

8. A geared motor according to one of the preceding Claims,
**characterised in that** the cover (29), the extra thickness (30, 34) and the washer are made in a single piece from a material having a low coefficient of friction.
